# EUROPEAN PATENT SPECIFICATION

(11) **EP 2 422 533 B1**
(45) Date of publication and mention of the grant of the patent: **25.10.2017**
(21) Application number: 09788528.9
(22) Date of filing: 22.04.2009
(51) Int. Cl.: H04W 48/10, H04W 76/00, H04W 84/04, H04W 4/22

(54) **METHODS AND APPARATUSES FOR TRANSMISSION OF WARNING INFORMATION IN A CELLULAR COMMUNICATIONS NETWORK**
VERFAHREN UND VORRICHTUNGEN ZUR ÜBERTRAGUNG VON WARNINFORMATIONEN IN EINEM ZELLULÄREN KOMMUNIKATIONSNETZ
PROCÉDÉ ET APPAREILS POUR UNE TRANSMISSION D'INFORMATIONS D'ALERTE DANS UN RÉSEAU DE COMMUNICATION CELLULAIRE

(43) Date of publication of application: 29.02.2012
(73) Proprietor: Telefonaktiebolaget LM Ericsson (publ), 164 83 Stockholm (SE)
(72) Inventor: KAZMI, Muhammad, S-167 39 Bromma (SE)
(74) Representative: Ericsson
(86) International application number: PCT/SE2009/050420
(87) International publication number: WO 2010/123421

(56) References cited:
- EP-A2- 1 209 886
- WO-A1-98/49661
- WO-A1-2008/081315
- US-B1- 7 084 775
- 3GPP TECHNICAL SPECIFICATION GROUP SERVICE AND SYSTEM ASPECTS: "3GPP TR 23.828 v8.0.0 (2008-09); Earthquake and Tsunami Warning System (ETWS) Requirements and Solutions; Solution Placeholder (Release 8)" 3GPP DRAFT; 23.828 V.8.0.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,, vol. 23.828, no. V8.0.0, 24 September 2008 (2008-09-24), pages 1-22, XP002533876

## Description

### Technical Field

The present invention relates to methods and arrangements in a cellular communications network, and in particular to signaling of warning information associated with an emergency situation.

### Background

The purpose of Earthquake and Tsunami Warning Systems (ETWS) is to collect information related to the earthquake or tsunami threat from seismic sensors and relay it to emergency points and other relevant alerting systems. In order to relay this information to mobile users, the emergency information is forward to a network node e.g. located in the core network of the mobile system. This network node e.g. an access gateway in E-UTRAN (Evolved UMTS Terrestrial Radio Access Network) will then distribute this information to the relevant radio access network nodes e.g. base stations, radio network controller, base station controller etc, which in turn will transmit the emergency information to the User Equipment (UE).

E-UTRAN is the radio network of a Long Term Evolution (LTE) system. 3GPP Long Term Evolution (LTE) is a project within the 3^{rd} Generation Partnership Project (3GPP) to improve the UMTS standard. In E-UTRAN, the UEs are wirelessly connected to the radio base stations denoted eNodeBs (eNB) and the eNBs are connected to the core network via access gateways.

In mobile communication, typically each cell has its own broadcast channel (BCH), which is used to transmit system information to all UEs in a cell. The transmission is repeated to allow new and existing UEs to acquire the up-to-date system information. The contents of the broadcasted information are distributed in chunks of data or blocks. The master information block (MIB) contains very fundamental information e.g. cell bandwidth, antenna configuration, system frame number (SFN) etc. All the remaining information is sent via a number of system information blocks (SIB). Different SIB may have different periodicity depending upon the significance of the contents. In order to convey ETSW related information to UE, in E-UTRAN, two additional SIBs (SIB # 10 and SIB # 11) are being standardized. The contents of these SIBs would typically contain application level data comprising intensity, time and location of the earthquake or tsunami as well as other information such as about relief effort or emergency aids. Since the level of the impending threat would typically change over time, it is important that the UE is capable of reading these SIBs whenever their contents are modified. The UE is made aware of their modification by the state of art methods such as via paging channel for the UE in idle mode. In connected mode the contents can be directly signaled to the UE via dedicated control channels. Similarly additional SIBs can be specified in future releases of the E-UTRAN or of other technologies to signal information related to other emergency or accidental situations.

Another broadcast transmission scenario in mobile network refers to the signaling of the same information to all users from multiple cells. Such techniques include for example, the Multimedia Broadcast Multicast Service (MBMS) in the 3G UMTS system and in the 3GPP Long Term Evolution (LTE) system or the Cell Broadcast Service (CBS) in 2G GSM systems.

One specific variant of MBMS is the Multimedia Broadcast Single Frequency Network (MBSFN). Within MBSFN network, the same contents are transmitted using the same physical resources (e.g. same scrambling code, frequency, timing etc) from all the cells belonging to MBSFN.

The ETWS related information can be transmitted via normal cell specific broadcast channel or via MBMS type network. However, typically this information will at least be sent via cell specific broadcast channel. The MBMS network may also be used for this purpose. One reason is that every UE is able to receive the normal BCH in E-UTRAN (or in other systems). Furthermore every service provider may not offer MBMS or may have limited MBMS coverage.

A UE in connected mode could acquire this information also via shared or a dedicated channel e.g. HS-DSCH in UTRAN or PDSCH in E-UTRAN.

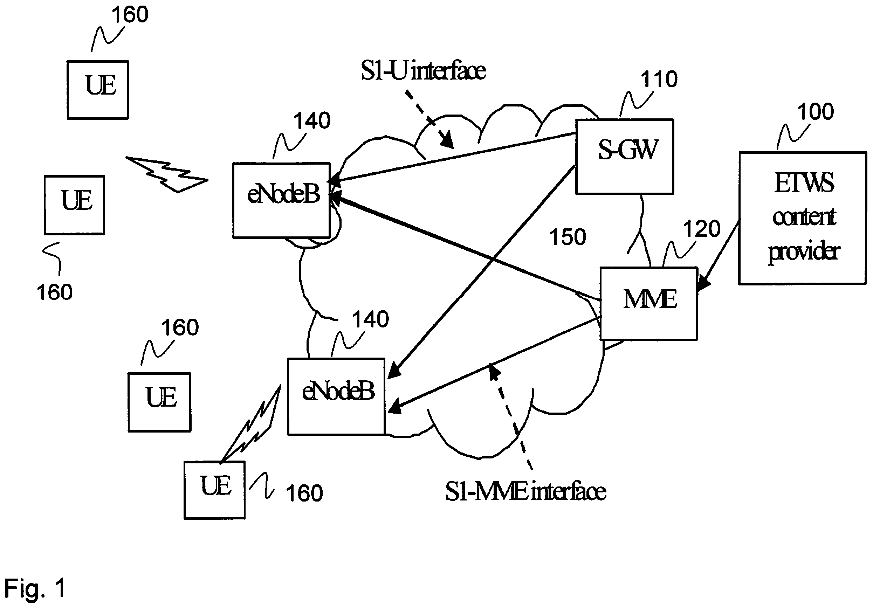

Figure 1 provides a general overview of the transmission of ETWS contents from an ETWS content provider 100 to the E-UTRAN core network 150 or the so-called evolved packet core (EPC). The EPC 150 comprises access gateway (AGW) and mobility management entity (MME) 120, which connects to the eNode B 140 via S1-U and SI-MME interfaces respectively. The SI-U carries user data between AWG 110 and the eNode B 140 whereas SI-MME carriers control or signaling information between the MME 120 and the eNode B. Thus in general the interface connecting the EPC to eNode B is called as S1 interface.

The serving AGW 110 or the gateway serving the eNode B is called as serving gateway (S-GW). More specifically the ETWS contents, which comprise control information are conveyed to the eNode B via the MME 120 over the SI-MME interface. The eNode Bs 140 may then transmit this information to the UEs 160 under their coverage.

In warning systems of prior art, e.g. as disclosed in JP2006148222A2 and JP2007228478A2, warning information will only be sent to UEs located in an area covered by a base station which is estimated to be affected by the emergency, e.g. an earthquake or a tsunami.

Depending upon their intensity, earthquake or tsunami could cause relentless havoc to both human life and property. This can also implicate the mobile network causing full or partial loss of the network coverage. The network disruption though may not always be due to the destruction caused by the earthquake or tsunami. Rather an operator could deliberately and selectively switch off some of the mobile network nodes (e.g. base stations) to conserve power, which may be in short supply under such circumstances. Furthermore, the base stations can be turned on or off in a controlled manner to ensure adequate coverage. Thus in an earthquake or tsunami scenario it is quite likely that some of the base stations may not be available at least temporarily. From US7084775 there is already known a method and system for generating and sending weather alerts.

### Summary

Hence, the users of the UEs connected to base stations affected by the emergency will not receive the warning information and users not located in the area directly affected by the emergency may still move towards the earthquake or tsunami without knowledge about the possible danger.

The object of the present invention is hence to provide an improved warning system.

This is achieved according to embodiments of the present invention, by sending warning information to UEs both within and outside an area affected, or an area estimated to be affected. The warning information comprises information associated with the affected area, or the area which is estimated to be affected, i.e. identities of the base stations within said area.

According to a first aspect the present invention provides a method in a network node for transmitting warning information associated with an emergency to UEs camped on or connected to the network node. In the method, information associated with the emergency is received from a system configured for collecting information associated with said emergency. The received information is processed to retrieve information associated with an area affected by, or an area estimated to be affected by the emergency, wherein the retrieved information is identities of radio base stations within the area which is affected, or estimated to be affected, by the emergency. Further, the retrieved information is transmitted to the UEs independently of whether the UEs are located in the area affected or estimated to be affected, by the emergency.

According to a second aspect of the present invention a method in a UE for receiving warning information associated with an emergency from a warning system connectable to a mobile communication network which the UE is configured to communicate with is provided. In the method, information associated with an area affected by, or an area estimated to be affected by the emergency is received from a network node independently of whether the UE is located in the area affected or estimated to be affected, by the emergency, wherein the retrieved information is identities of radio base stations within the area which is affected, or estimated to be affected, by the emergency. The received information is processed to combine the received information with map information representing at least a part of the area affected by, or an area estimated to be affected by the emergency and the combined information is presented on e.g. a display of the UE.

According to a third aspect of the present invention a network node for transmitting warning information associated with an emergency to UEs configured to camp on or to be connected to the network node is provided. The network node comprises a receiver for receiving information associated with the emergency from a system configured for collecting information associated with said emergency, wherein the retrieved information is identities of radio base stations within the area which is affected, or estimated to be affected, by the emergency. A processor for processing the received information to retrieve information associated with an area affected by, or an area estimated to be affected by the emergency is further provided and the network node comprises also a transmitter for transmitting the retrieved information to the UEs independently of whether the UEs are located in the area affected or estimated to be affected, by the emergency.

According to a fourth aspect of the present invention a UE for receiving warning information associated with an emergency from a warning system is provided. The warning system is connectable to a mobile communication network which the UE is configured to communicate with. The UE comprises a receiver for receiving information associated with an area affected by, or an area estimated to be affected by the emergency from a network node (303) independently of whether the UE is located in the area affected or estimated to be affected, by the emergency, wherein the retrieved information is identities of radio base stations within the area which is affected, or estimated to be affected, by the emergency. The UE comprises further a processor for processing the received information to combine the received information with map information representing at least a part of the area affected by, or an area estimated to be affected by the emergency, and a user interface configured to present the combined information to a user.

According to fifth aspect a method concerning the UE and the network node is provided. The method comprises accordingly the above described steps of the network node and the UE.

An advantage with embodiments of the present invention is that it is possible to distribute warning information wherein a part of the mobile network, e.g. certain base stations, has become dysfunctional or has to be intentionally shut down for instance due to energy constraint.

In addition, embodiments of the present invention allows subscriber to locate the base station sites, which are functional, thereby allowing the UEs to move closer to these sites so as to access emergency help.

A further advantage with embodiments of the present invention is that UE power consumption can be reduced since the UE may be instructed to only search for cells, which are functional.

### Brief Description of the Drawings

**Fig. 1** illustrates transmission of ETWS information in an E-UTRAN system according to prior art.
**Fig. 2** is a sequence diagram of embodiments of the present invention.
**Fig. 3** illustrates schematically a UE, a base station and an ETWS system according to embodiments of the present invention.
**Fig. 4** illustrates a possible view to be displayed on a UE according to an embodiment of the present invention. The view indicates fully or partially affected base station sites on the map of earthquake and/or tsunami affected zone.
**Figs. 5** and **6** are flowcharts of methods according to embodiments of the present invention.

### Detailed Description

The present invention will be described more fully hereinafter with reference to the accompanying drawings, in which preferred embodiments of the invention are shown. The invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like reference signs refer to like elements.

Moreover, those skilled in the art will appreciate that the means and functions explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as a system comprising a computer processor and a memory coupled to the processor, wherein the memory is encoded with one or more programs that may perform the functions disclosed herein.

**Figure 1** illustrates a system wherein the embodiments of the present invention may be implemented. Although figure 1 specifically describes the transmission of ETWS contents to the UE via E-UTRAN network, however ETWS contents can be transmitted to the UE via any other suitable underlying technology such as UTRAN, GSM, cdma200 etc. Hence, the embodiments of the present invention are not limited to any particular technology.

In the state of the art solutions the ETWS related signaled information comprises intensity of threat or disaster, time duration etc. The idea of the present invention is to provide additional and more comprehensive information especially related to affected areas and disrupted parts of the network. It should be appreciated that although the term ETWS is used throughout the specification, the embodiments of the present invention are also applicable in relation with other emergency situations than earthquake and tsunami scenarios.

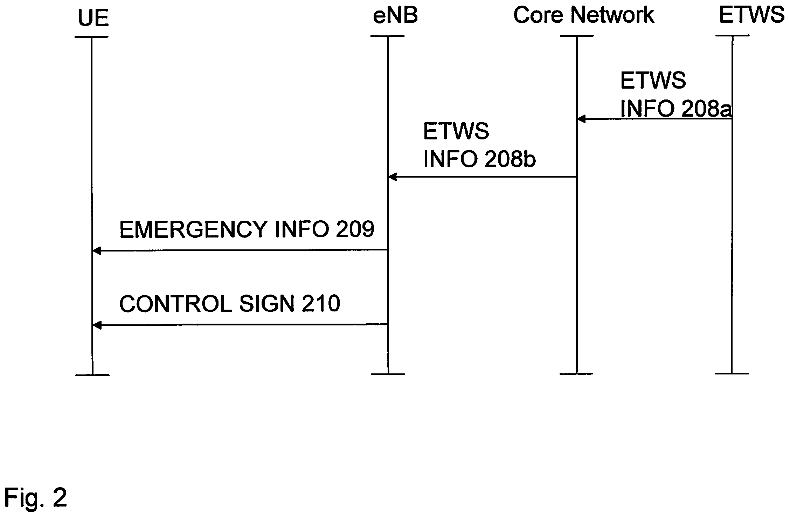

In accordance with an embodiment of the present invention and as illustrated in the sequence diagram of **figure 2****,** an earthquake and tsunami warning system (ETWS) identifies tsunami or earthquake threat and sends 208a ETWS information to a core network of a cellular network via an access gateway. The access gateway forwards 208b the ETWS information to all or a subset of the base stations connected to the access gateway. Each base station which receives the ETWS information processes the ETWS information to obtain information associated with an area affected by, or an area estimated to be affected by the emergency, e.g. geographical coordinates of the affected area. The obtained information is then transmitted 209 to the UEs located in the area covered by the base stations.

A further refinement is that both geographical information and the expected time duration of the emergency are obtained from the ETWS information and transmitted to the UE. According to further embodiments, the obtained information would further comprise: information of the part of the network, which is affected or which is available. The information regarding available or affected network parts may allow the UE to only search for cells which are available. This type of information is advantageously displayed on mobile screen or by other means distributed to the user of the UE, e.g. by a speaker or other kind of audio means. This would therefore allow mobile users to head towards available base stations to initiate call in emergency or acquire updated information.

The UEs may support location based services e.g. A-GPS and use this service to determine whether the UEs are located in an area affected by the emergency or not. This method will particularly allow mobile user to remain updated when sub-set of base stations or part of mobile network is disrupted due to tsunami or earthquake.

Furthermore, according to embodiments of the present invention, the network may control the UE behavior based on the ETWS information. I.e., the network may control the UEs to only measure on available base stations, which results in that the UEs can avoid searching for dysfunctional base stations which implies that battery consumption can be reduced. That may be achieved by sending control information to the UE. As an alternative, or in combination, the UE may be configured with predefined rules how to behave in different situations depending on the received ETWS information. The pre-defined rules may be specified in the standard. Yet in another alternative the UE may also be made to act according to the combination of the received control signaling and the pre-defined rules.

In mobile communication network typically each base station signals neighbor cell list and associated necessary information i.e. cell identity to the UE. The information is signaled via BCH and dedicated control channels to the UE in idle and connected modes respectively. The purpose is to enable UE searching of neighbor cells, which are potential candidates for cell reselection in idle mode or for handover in connected mode. This type of list of cells is also called a white list since the UE should search cells from this list. In addition, the network typically also signals a black list of neighbor cells, which are not allowed for performing cell reselection or handover. The black list could be applicable to all UEs or to certain category of UEs or according to certain subscription policy of the operator. In E-UTRAN, the signaling of the white list is not mandatory but the black list is used in the case when operator wants to forbid access to certain cells.

Both in idle and connected mode the UE regularly searches for new cells. The cell search process comprises the steps of performing correlation over the synchronization sequences indicated in the white list. In absence of the white list the UE typically performs correlation over all possible permutations of synchronization sequences. Depending upon UE implementation the UEs exclude the cells in the black list either during cell search process or while cell reselection and handover related event evaluation.

By using the ETWS information received from the ETWS system, it is possible to identify base stations affected by the emergency situation. Hence, further cell lists e.g. a red cell list indicating base stations being dysfunctional due to the emergency situation may be created according to embodiments of the invention. Accordingly, the signaled warning information to the UE in the event of ETWS related threat may further comprise the red cell list. The UE may then comprise means for displaying or in another way inform the user of the UE of the location of the dysfunctional base stations in combination with the location of the UE. In connection with the signaling of the red cell list, the network can control the UE behavior based on the knowledge of the dysfunctional base stations affected by the emergency. In addition, the UE behavior may also be based on further parameters such as time duration of threat, earthquake intensity etc. That implies that the network can control the UE to avoid searching for dysfunctional cells in connection with measurements and handover etc.

The popularity of a service allowing the determination of user positioning via a dedicated handheld device or an integrated mobile phone is on the rise. Furthermore, for safety purposes, mobile positioning is gradually becoming mandatory in several parts of the world. Thus, in upcoming years most mobile devices are likely to support some sort of positioning mechanism. Examples of methods for positioning UEs are: satellite based positioning, fingerprinting and time of arrival based methods.

Global Navigation Satellite System (GNSS) is the standard generic term for satellite navigation systems that enable subscriber to locate their position and acquire other relevant navigational information.

The global positioning system (GPS) and the European Galileo positioning system are well known examples of GNSS. Other potential systems, which are either proposed or being developed include: Russian GlObal Navigation Satellite System (GLONASS), Chinese COMPASS and Indian Regional Navigational Satellite System (IRNSS).

The GPS comprises a constellation of 24 to 32 medium earth orbit (MEO) satellites revolving around the earth. They transmit pilot signals and other broadcast information, which are received and processed by the GPS receivers for determining geographical position. Signals from certain number of satellites (e.g. 5 or more) should be received in order for the GPS receiver to accurately location the geographical position of the user.

The assisted GPS (A-GPS) is tailored to work with a user terminal (UE) and thus enables UE subscribers to relatively accurately determine their location, time, and even velocity (including direction) in open area environment provided sufficient number of satellites are visible.

On the other hand the positioning methods based on fingerprinting enable the location of mobile users with good accuracy in closed or indoor locations such as in buildings, parking lots, hospitals, etc.

Among various positioning methods, A-GPS is considered to be one of the most viable and commonly used one.

The UE directly receives GPS (or any GNSS) signals from satellites without the intervention of any ground station, therefore GPS reception will not be disrupted regardless of the intensity of earthquake or tsunami.

The above described embodiments will be described in more detail below.

In one embodiment each base station signals GPS related information of the areas, which are affected or are under threat due to earthquake or tsunami. Even though GPS is used to exemplify the embodiments, the embodiments can also be applied to any other satellite based positioning method (i.e. any GNSS based system). For instance, the GPS related information may comprise relevant GPS location of the affected areas e.g. the epicenter of earthquake or tsunami and the radius covering the affected areas. More precisely the GPS related information may comprise a set of latitude and longitude of the center of the affected area and radius. Alternatively, the GPS related information consists of three or more sets of coordinates forming a polygon covering the affected area.

The information associated with an area affected by, or an area estimated to be affected by the emergency may be signaled to the UEs via SIB (e.g. SIB#10 and SIB#10 in E-UTRAN) for idle mode UE and via dedicated control channel for connected mode UE. The information can also be signaled to the UE via MBMS or MBSFN network if that is available.

The UE may use the signaled information associated with an area affected by, or an area estimated to be affected by the emergency to display the entire affected area on the map on its screen. Furthermore the UE will determine its GPS position using state of art method and display it on the same map. This will allow the subscriber to locate itself with respect to the affected area.

The UE may update the displayed map on the screen in case the affected area is changed as indicated by the renewed GPS information. As usual, the UE will have an opportunity to update the information after cell reselection or handover or when information is modified as indicated by the network e.g. via paging in idle mode. Consequently the UE position relative to the affected area will be changed accordingly as the moves since UE regularly also track its own position using GPS.

The use of GPS information is advantageous since GPS satellites would remain unaffected regardless of the intensity of an earthquake or tsunami or due to any other terrestrial emergency situation. However other positioning information e.g. coordinates and radius of affected area pertaining to other non satellite based methods (e.g. time difference of arrival based method, path loss based method, fingerprinting etc) may also be used. These non satellite based methods require that a certain number of neighbor cells are functional allowing the UE to receive signals from these cells in order to determine its position and consequently present its position with respect to the affected areas.

As described above, the red cell list implies a set of cells (e.g. cell identities), which are dysfunctional or intentionally unavailable in earthquake or tsunami affected area.

In both idle and connected modes the UE needs to maintain a list of certain number of strongest neighbour cells. These cells are in turn used by the UE for performing cell reselection in idle mode or handover in connected mode. Thus, in order to maintain an updated list of certain number of the strongest cells, the UE regularly searches for new neighbour cells. The cell to which the UE is connected in idle mode is often called as camped cell. In connected mode such a cell is called as serving cell.

According to embodiments of the present invention, the UE may use this information when performing cell search both in idle and connected modes. For instance the UE can exclude cells indicated as dysfunctional for searching and would therefore speed up cell search process and save UE power consumption.

A red cell list may either be limited or it may be more comprehensive. The red cell list is signaled by each functioning cell via broadcast channel for all idle mode UEs in the cell. On the other hand each cell in connected mode can receive the red list by the serving cell via UE specific dedicated control channel.

The limited red cell list may be associated with a list of dysfunctional cell(s), which is (are) the closest neighbor(s): to the camped cell (i.e. for users in idle mode) or to the serving cell (i.e. for users in connected mode). Alternatively the comprehensive red cell list could contain all cells in the affected area. The former approach leads to a shorter list of cells since the list only concerns the closest neighbor. In the latter approach the list may be longer. The advantage of the second approach is that UE will be aware of all dysfunctional cells in the entire area which could further simplify the cell search. However since physical cell IDs are typically reused (e.g. 504 physical cell identities in E-UTRAN or 512 physical cell identities in WCDMA), it might be appropriate to use the latter approach in case the affected area is very large.

In one embodiment, GPS information or information related to other positioning methods of the affected area such as coordinates, radius of area as well as some specific cell list is signaled to the UE. The combination of GPS information and cell list information would enable the UE to display the base station sites to indicate currently ineffective or partially disrupted sites. This is very useful information to the subscriber. In particular if the subscriber cannot access the network due to partial disruption of some of the sites and is in dire need of any assistance, it can physically move close to the sites, which are shown to be functional on the map displayed on its mobile screen.

Hence, GPS information or information related to other positioning methods of the affected area as well as red cell list is signaled to the UE.

Accordingly, the UE can display the affected area and its own position on a map or the UE can in another way present corresponding information to the user, e.g. by vocally conveying the corresponding information via a loudspeaker of the UE to the user. Furthermore the UE will also use the red list to improve cell search. Additionally the UE will also indicate on the map the position of red cells i.e. which are dysfunctional. In the prior art solution the UE can determine the physical location of the base station as seen on the Google map. In this embodiment, the UE maps the red cell list information on the map by indicating for instance the base stations, which are not currently functional. Proper mapping of cell ID to its geographical location may require that red cell list comprise cell ID related information as well as location of each site (e.g. geographical coordinates such as GPS related information). There is significant advantage of signaling location information of the sites as this information can be directly mapped on the map with an indication that these sites are not available. As stated above this will allow the subscriber requiring help to head closer to the sites, which are available.

Thus the red cell list can be used for showing the location of disrupted base stations on the map on the mobile screen and to reduce cell search hypothesis.

Several operators have co-located cells in the same base station sites.

Furthermore, cells of different access technologies (e.g. GSM, WCDMA, E-UTRAN etc) can be co-located to reduce operating cost of the sites. As discussed in preceding sections certain base station sites could become dysfunctional either directly due to the impact of earthquake or tsunami or other emergency situation due to the deliberate action of the operator for conserving energy. In the former scenario it is more likely that the entire affected base station site, which includes all co-located cells or cells operated by this site, becomes dysfunctional. In the latter scenario an operator may shut down some of the co-located cell in a number of base station sites. To account for the latter scenario, another cell list denoted as 'yellow cell list' is introduced. The yellow cell list will in fact represent base station sites, which offer limited coverage as opposed to red cell list, which corresponds to base station sites, which are fully dysfunctional. Furthermore the yellow cell list could also contain the geographical position of the sites in addition to usual cell ID related information. Then the idea of this embodiment is that the UE uses GPS and cell lists information (i.e. both red and yellow) to indicate both sets of base station sites on its screen: fully disrupted ones (red sites) and those with limited access (yellow sites).

A further refinement is that UE also displays fully functional sites e.g. represented by green sites. The green sites are those which are neither included in red nor in yellow lists.

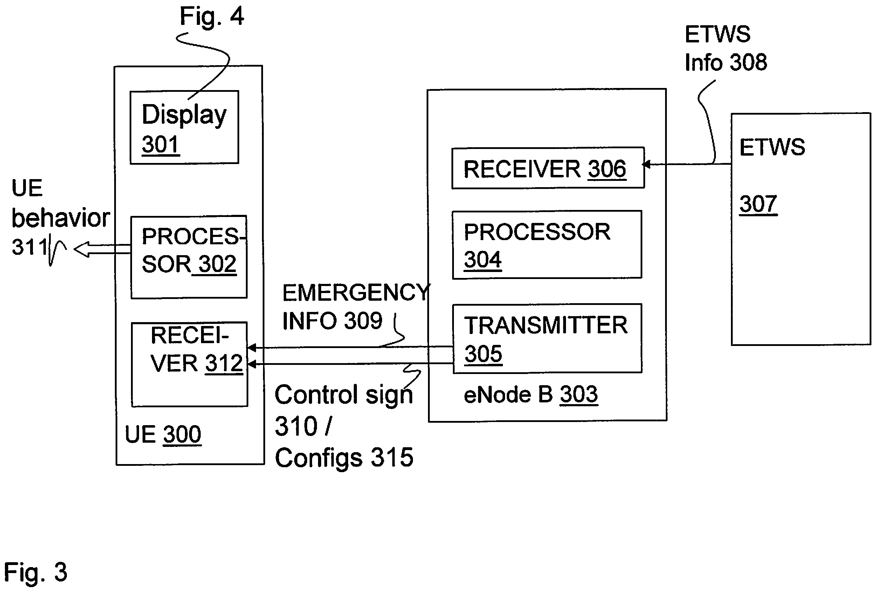

Turning now to **figure 3**, illustrating the arrangements according to the embodiments of the present invention. Warning information, referred to as ETWS information 308, is sent from the ETWS system 307 to the cellular network via the core network to a network node such as the eNode B, base station controller, or access gateway 303. Although the term ETWS is used it in the description, it should be understood that the warning system and warning information may also relate to other emergency situations. Accordingly, the network node comprises a receiver 306 for receiving information 308 associated with the emergency from the ETWS system 307 configured for collecting information associated with said emergency. Furthermore the network node comprises a processor 304 for processing the received information 308 to retrieve information 309 associated with an area affected by, or an area estimated to be affected by the emergency (e.g. GPS coordinates), and a transmitter 205 for transmitting the retrieved information 309 to the UEs 309 independently of whether the UEs 309 are affected, or are estimated to be affected, by the emergency. Hence UEs located both within and outside the affected area, or the area estimated to be affected, may obtain the warning information which is referred to as the retrieved information above.

The retrieved information may as indicated above comprise geographical information of the area affected by, or an area estimated to be affected by, the emergency and/or identities of radio base stations within the area which is affected, or is estimated to be affected, by the emergency. Accordingly, the processor may be adapted to retrieve identities of radio base stations, which are affected by the emergency.

In addition, the network node may be configured to control the behavior of the UE according to the retrieved information, e.g. by sending control information when the UE is in connected mode. The network node may also send configurations to the UE comprising predefined rules how to behave in different situations depending on the emergency information. The pre-defined rules may be specified in the standard. Alternatively the UE may also be made to act according to the combination of command received by the control signaling and the pre-defined rules. Examples of the UE behavior are cell search, performing measurements and cell reselection.

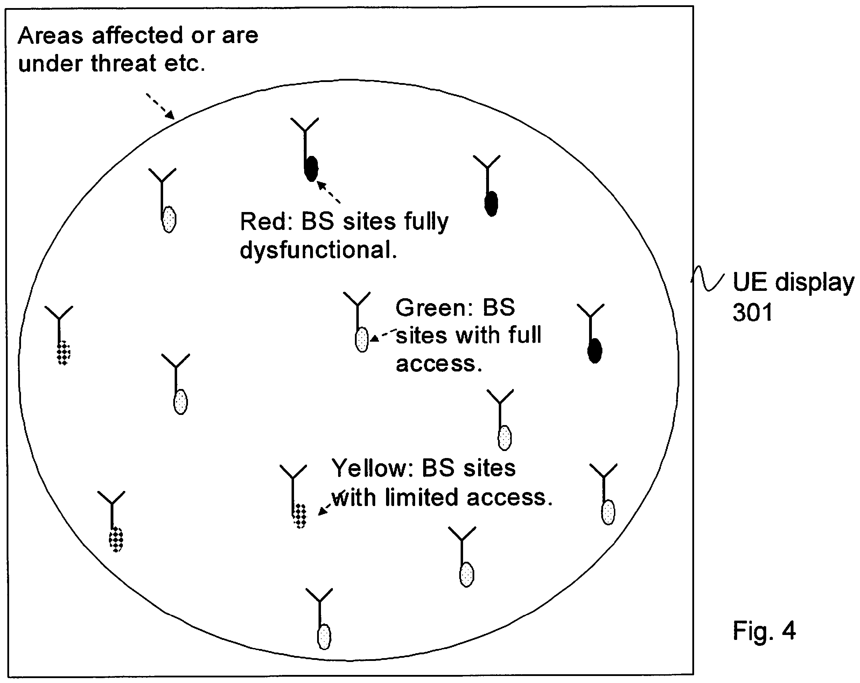

The UE 200 comprises a receiver 312 for receiving the information 309 associated with an area affected by, or an area estimated to be affected by the emergency from the network node 303 independently of whether the UE 300 is affected, or is estimated to be affected, by the emergency. The UE comprises further a processor 302 for processing the received information to combine the received information with map information representing at least a part of the area affected by, or an area estimated to be affected by the emergency. The combined information is presented to a user via a user interface 301, e.g. a display as illustrated in figure 4 displaying fully functional, partially functional or completely dysfunctional base station sites.

The receiver 312 of the UE is further configured to receive control signaling 310 comprising commands, wherein the commands are dependent on the received information from the network node, and the processor 302 may be configured to make the UE act according to the commands of the received control signalling 310. The command may be associated with at least one of cell search, measurements, handover and cell reselection. It should be noted that the UE may also choose to behave according to pre-defined rules by making use of the received information without control signalling from the base station. The predefined rules may be received in a configuration message from the network. The pre-defined rules may also be specified in the standard. Alternatively the UE may also be made to act according to the combination of command received by the control signaling and the pre-defined rules.
Alternatively the UE may also autonomously optimize one or more of the performance aspects such as cell search, measurement, cell reselection or handover solely based on the received information (e.g. cell lists) in the absence of pre-defined rules and control signalling from the base station.

Yet in another embodiment the UE behaviour can be controlled according to the combination of received controlled signalling and pre-defined rules.

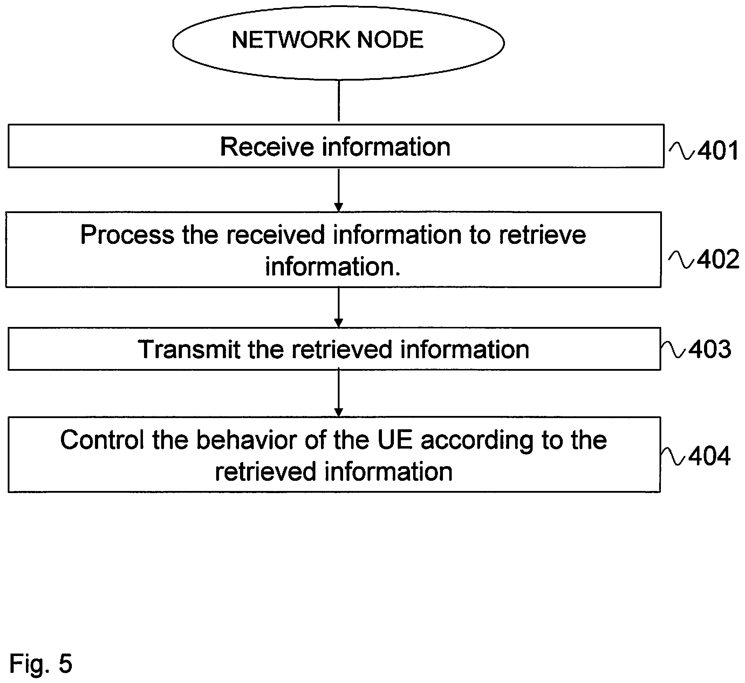

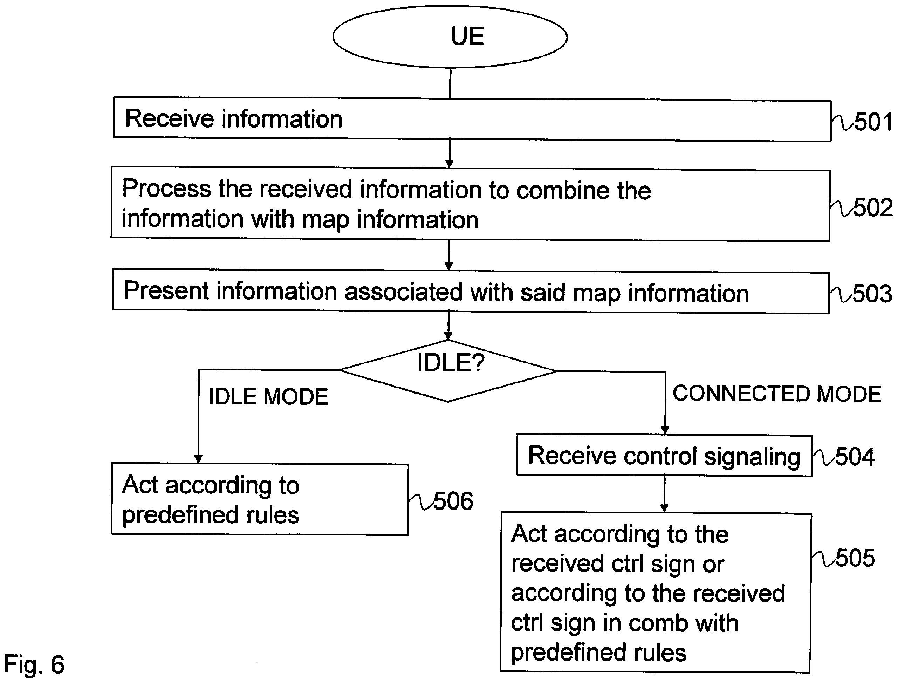

As illustrated in **figures 5** and **6**, the present invention relates to methods in a UE and in a network node, respectively. **Figure 5** is a flowchart of the method in the network node according to embodiments of the present invention. The method comprises the steps of:
401. Receive information associated with the emergency from a system configured for collecting information associated with said emergency.
402. Process the received information to retrieve information associated with an area affected by, or an area estimated to be affected by the emergency.
403. Transmit the retrieved information to the UEs independently of whether the UEs are affected, or are estimated to be affected, by the emergency.
404. Control the behavior of the UE according to the retrieved information. The network node may be an access gateway, base station controller or a base station such as an eNodeB.

**Figure 6** is a flowchart of the method in the UE according to embodiments of the present invention. The method comprises the steps of:
501. Receive information associated with an area affected by, or an area estimated to be affected by the emergency from a network node independently of whether the UE is affected, or is estimated to be affected, by the emergency.
502. Process the received information to combine the received information with map information , which may be visual or vocal, representing at least a part of the area affected by, or an area estimated to be affected by the emergency.
503. Present the combined information.

If the UE is in connected mode, the UE may receive 504 control signaling comprising commands, wherein the commands are dependent on the information associated with an area affected by, or an area estimated to be affected by the emergency from a network node, and act 505 according to the commands of the received control signalling and/or the pre-defined rules.

If the UE is in idle mode, the UE may act 506 based on the presented information and pre-defined rules if they exist.

The action of the UE may relate to cell search, performing measurements and/or cell reselection.

Some well known ETWS related parameters, which are signaled in the state of the art solutions include intensity of the threat or disaster, the expected time of the occurrence of tsunami (or earthquake though its prediction is very difficult) in that area and the predicted time duration (T0) over which the threat is likely to last. Among these parameters particularly the predicted time duration of threat (T0) could be combined with any of the above described embodiments to ensure that the subscribers remain updated of the situation.

The cellular network is in this specification exemplified by an LTE network, but the embodiments of the present invention are also applicable to other cellular networks.

In addition, the warning information may be transmitted by means of different types of transmission mechanism e.g. BCH, MBMS, dedicated channel, shared channel etc, in any wireless communication system such as E-UTRAN, UTRAN, GSM, cdma2000 etc.

Although the main focus of the ideas in this disclosure is based on scenarios in the wake of earthquake and/or tsunami, the embodiments of the present invention are equally applicable to other scenarios, which could potentially lead to large scale accidental or man made catastrophic eventualities e.g. massive floods, terrorist acts, fires etc.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A method in a network node for transmitting warning information associated with an emergency to User Equipments, UEs, camped on or connected to the network node, the method comprises the steps of:
- receiving (401) information associated with the emergency from a system configured for collecting information associated with said emergency,
- processing (402) the received information to retrieve information associated with an area affected by, or an area estimated to be affected by the emergency, wherein the retrieved information is identities of radio base stations within the area which is affected, or is estimated to be affected, by the emergency, and
- transmitting (403) the retrieved information to the UEs independently of whether the UEs are located in the area affected or estimated to be affected, by the emergency.

2. The method according to claim 1, comprising the further step of:
- controlling (404) a behaviour of the UE according to the retrieved information.

3. The method according to any of the claims 1-2, comprising the further step of:
- configuring the UE such that the UE behaves according to pre-defined rules upon reception of the retrieved information.

4. The method according to claim 2 or 3, wherein the UE behaviour is associated with at least one of cell search, measurements, handover and cell reselection.

5. The method according to any of the previous claims 1-4, wherein the network node is an access gateway, a radio network controller, a base station controller, a radio base station or an eNode B.

6. A method in a User Equipment, UE1 for receiving warning information associated with an emergency from a warning system connectable to a mobile communication network which the UE is configured to communicate with, the method comprises the steps of:
- receiving (501) information associated with an area affected by, or an area estimated to be affected by the emergency from a network node independently of whether the UE is located in the area affected or estimated to be affected, by the emergency, wherein the received information is identities of radio base stations within the area which is affected, or is estimated to be affected, by the emergency,
- processing (502) the received information to combine the received information with map information representing at least a part of the area affected by, or an area estimated to be affected by the emergency, and
- presenting (503) the combined information.

7. The method according to claim 6, wherein the received information is geographical information of the area affected by, or an area estimated to be affected by, the emergency.

8. The method according to any of the previous claims 6-7, comprising the further step of:
- receiving (504) control signalling comprising commands, wherein the commands are dependent on the information associated with an area affected by, or an area estimated to be affected by the emergency from a network node, and
- acting (505) according to the commands of the received control signalling.

9. The method according to any of the claims 6-8, comprising the further step of:
- acting according to pre-defined rules upon reception of the information.

10. The method according to any of claims 8-9, wherein the action is associated with at least one of cell search, measurements, handover and cell reselection.

11. A network node (203) for transmitting warning information associated with an emergency to User Equipments, UEs, configured to camp on or to be connected to the network node, the network node comprises a receiver (206) for receiving information (208) associated with the emergency from a system (207) configured for collecting information associated with said emergency, a processor (204) for processing the received information (208) to retrieve identities of radio base stations within an area affected by, or an area estimated to be affected by the emergency, and a transmitter (205) for transmitting the retrieved identities of radio base stations to the UEs (209) independently of whether the UEs (209) are located in the area affected or estimated to be affected, by the emergency.

12. A User Equipment, UE, (300) for receiving warning information (309) associated with an emergency from a warning system (307) connectable to a mobile communication network which the UE (300) is configured to communicate with, the UE comprises a receiver (312) for receiving identities of radio base stations within an area affected by, or an area estimated to be affected by the emergency from a network node (303) independently of whether the UE (300) is located in the area affected or estimated to be affected, by the emergency, and a processor (302) for processing the received identities of radio base stations to combine the received identities of radio base stations with map information representing at least a part of the area affected by, or an area estimated to be affected by the emergency, and a user interface (301) configured to present the combined information to a user.

13. A method for distributing warning information associated with an emergency to User Equipments, UEs, camped on or connected to a network node of a cellular communication system, the method comprises the steps of:
- receiving (401) at the network node information associated with the emergency from a system configured for collecting information associated with said emergency,
- processing (402) at the network node the received information to retrieve identities of radio base stations within an area affected by, or an area estimated to be affected by the emergency, and
- transmitting (403) the retrieved identities of radio base stations from the network node to the UEs independently of whether the UEs are located in the area affected or estimated to be affected, by the emergency,
- receiving (501) at a UE identities of radio base stations withinan area affected by, or an area estimated to be affected by the emergency from a network node independently of whether the UE is located in the area affected or estimated to be affected, by the emergency,
- processing (502) at the UE the received identities of radio base stations to combine the received identities of radio base stations with map information representing at least a part of the area affected by, or an area estimated to be affected by the emergency, and
- presenting (503) at the UE the combined information.

## Patentansprüche

1. Verfahren in einem Netzwerkknoten zum Übertragen einer Warninformation, die einem Notfall für Benutzergeräte UEs zugeordnet wird, die in Wartestellung für eine Verbindung ist oder mit dem Netzwerkknoten verbunden wird, wobei das Verfahren die Schritte umfasst:
- Empfangen (401) von einer Information, die dem Notfall eines Systems zugeordnet wird, das zum Sammeln von dem Notfall einer zugeordneten Information konfiguriert wird,
- Verarbeiten (402) der empfangenen Information, um eine Information abzurufen, die einem durch den Notfall betroffenen Bereich zugeordnet wird, oder einem Bereich, der eingeschätzt wird, betroffen zu sein, wobei die abgerufene Information Identifikationen von Funkbasisstationen innerhalb des Bereichs ist, der durch den Notfall betroffen wird, oder eingeschätzt wird, betroffen zu sein, und
- Übertragen (403) der abgerufenen Information an die UEs, unabhängig davon, ob die UEs in dem durch den Notfall betroffenen Bereich angeordnet oder eingeschätzt werden, betroffen zu sein.

2. Verfahren nach Anspruch 1, das den weiteren Schritt umfasst:
- Kontrollieren (404) eines Verhaltens des UEs gemäß der abgerufenen Information.

3. Verfahren nach einem der Ansprüche 1 bis 2, das den weiteren Schritt umfasst:
- Konfigurieren des UEs so, dass sich das UE bei Empfang der abgerufenen Information gemäß vordefinierten Regeln verhält.

4. Verfahren nach Anspruch 2 oder 3, wobei das UE-Verhalten mindestens einem von Zellensuche, Messungen, Übergabe und Zellenneuauswahl zugeordnet wird.

5. Verfahren nach einem der vorhergehenden Ansprüche 1 bis 4, wobei der Netzwerkknoten ein Zugriffsgateway, eine Funknetzwerksteuerung, eine Basisstationssteuerung, eine Funkbasisstation oder ein eNode B ist.

6. Verfahren in einem Benutzergerät UE1 zum Empfangen von einem Notfall einer zugeordneten Warninformation von einem Warnsystem, das mit einem beweglichen Kommunikationsnetzwerk verbindbar ist, mit dem das UE konfiguriert wird, in Verbindung zu stehen, wobei das Verfahren die Schritte umfasst:
- Empfangen (501) von einem Netzwerkknoten von einer Information, die einem durch den Notfall betroffenen Bereich zugeordnet wird oder einem Bereich, der eingeschätzt wird, betroffen zu sein, unabhängig davon, ob das UE in dem durch den Notfall betroffenen Bereich angeordnet wird oder eingeschätzt wird, betroffen zu sein, wobei die empfangene Information Identifikationen von Funkbasisstationen innerhalb des durch den Notfall betroffenen Bereichs ist oder eingeschätzt wird, betroffen zu sein,
- Verarbeiten (502) der empfangenen Information, um die empfangene Information mit einer Karteninformation zu verbinden, die mindestens einen Teil des durch den Notfall betroffenen Bereichs darstellt oder einen Bereich,
der eingeschätzt wird, betroffen zu sein, und
- Darstellen (503) der kombinierten Information.

7. Verfahren nach Anspruch 6, wobei die empfangene Information geographische Informationen des durch den Notfall betroffenen Bereichs oder eines Bereichs ist, der eingeschätzt wird, betroffen zu sein.

8. Verfahren nach einem der vorhergehenden Ansprüche 6 bis 7, das den weiteren Schritt umfasst:
- Empfangen (504) einer Steuersignalisierung von einem Netzwerkknoten, die Befehle umfasst, wobei die Befehle von der Information abhängig sind, die einem durch den Notfall betroffenen Bereich zugeordnet wird oder einem Bereich, der eingeschätzt wird, betroffen zu sein, und
- Handeln (505) gemäß den Befehlen der empfangenen Steuersignalisierung.

9. Verfahren nach einem der Ansprüche 6 bis 8, das den weiteren Schritt umfasst:
- Handeln gemäß vordefinierten Regeln bei Empfang der Information.

10. Verfahren nach einem der Ansprüche 8 bis 9, wobei die Handlung mindestens einem von Zellensuche, Messungen, Übergabe und Zellenneuauswahl zugeordnet wird.

11. Netzwerkknoten (203) zum Übertragen von einem Notfall einer zugeordneten Warninformation an Benutzergeräte UEs, die konfiguriert werden, in Wartestellung für eine Verbindung zu sein oder mit dem Netzwerkknoten verbunden zu werden, wobei der Netzwerkknoten einen Empfänger (206) zum Empfangen von dem Notfall einer zugeordneten Information (208) von einem System (207), das zum Sammeln von dem Notfall einer zugeordneten Information konfiguriert wird, einen Prozessor (204) zum Verarbeiten der empfangenen Information (208), um Identifikationen von Funkbasisstationen innerhalb eines betroffenen Bereichs abzurufen oder eines Bereichs, der eingeschätzt wird, betroffen zu sein, und einen Sender (205) zum Übertragen der abgerufenen Identifikationen der Funkbasisstationen an die UEs (209) umfasst, unabhängig davon, ob die UEs (209) in dem durch den Notfall betroffenen Bereich angeordnet oder eingeschätzt werden, betroffen zu sein.

12. Benutzergerät UE (300) zum Empfangen einer Warninformation (309), die einem Notfall eines Warnsystems (307) zugeordnet wird, das an ein bewegliches Kommunikationsnetzwerk verbindbar ist, mit dem das UE (300) konfiguriert wird, in Verbindung zu stehen, wobei das UE einen Empfänger (312) zum Empfangen von Identifikationen von Funkbasisstationen innerhalb eines durch den Notfall von einem Netzwerkknoten (303) betroffenen Bereichs oder eines Bereichs, der eingeschätzt wird, betroffen zu sein, unabhängig davon, ob das UE (300) in dem durch den Notfall betroffenen Bereich angeordnet oder eingeschätzt wird, betroffen zu sein, und einen Prozessor (302) zum Verarbeiten der empfangenen Identifikationen der Funkbasisstationen, um die empfangenen Identifikationen der Funkbasisstationen mit einer Karteninformation zu verbinden, die mindestens einen Teil des betroffenen Bereichs darstellen oder eines Bereichs, der eingeschätzt wird, betroffen zu sein, und eine Benutzerschnittstelle (301) umfasst, die konfiguriert wird, um die kombinierte Information für einen Benutzer darzustellen.

13. Verfahren zum Verteilen von einem Notfall einer zugeordneten Warninformation an Benutzergeräte UEs, die in Wartestellung für eine Verbindung sind oder mit einem Netzwerkknoten eines zellulären Kommunikationssystems verbunden werden, wobei das Verfahren die Schritte umfasst:
- Empfangen (401) von dem Notfall einer zugeordneten Information an dem Netzwerkknoten von einem System, das zum Sammeln von dem Notfall zugeordneten Informationen konfiguriert wird,
- Verarbeiten (402) der empfangenen Information an dem Netzwerkknoten, um Identifikationen von Funkbasisstationen innerhalb eines von dem Notfall betroffenen Bereichs oder eines Bereichs abzurufen, der eingeschätzt wird, betroffen zu sein, und
- Übertragen (403) der abgerufenen Information der Funkbasisstationen von dem Netzwerkknoten an die UEs, unabhängig davon, ob die UEs in dem durch den Notfall betroffenen Bereich angeordnet oder eingeschätzt werden, betroffen zu sein,
- Empfangen (501) von einem Netzwerkknoten an einem UE von Identifikationen von Funkbasisstationen innerhalb eines durch den Notfall betroffenen Bereichs, oder eines Bereichs, der eingeschätzt wird, betroffen zu sein, unabhängig davon, ob das UE in dem durch den Notfall betroffenen Bereich angeordnet oder eingeschätzt wird, betroffen zu sein,
- Verarbeiten (502) der empfangenen Identifikationen der Funkbasisstationen an dem UE, um die empfangenen Identifikationen der Funkbasisstationen mit einer Karteninformation zu verbinden, die mindestens einen Teil des betroffenen Bereichs darstellt oder eines Bereichs, der eingeschätzt wird, betroffen zu sein, und
- Darstellen (503) der kombinierten Information an dem UE.

## Revendications

1. Procédé dans un noeud de réseau pour transmettre une information d'alerte qui est associée à une urgence à des équipements d'utilisateur, UE, qui sont campés sur le noeud de réseau ou qui lui sont connectés, le procédé comprenant les étapes consistant à :
- recevoir (401) une information qui est associée à l'urgence et qui provient d'un système qui est configuré pour collecter l'information qui est associée à ladite urgence ;
- traiter (402) l'information reçue de manière à récupérer une information qui est associée à une zone qui est affectée par l'urgence ou à une zone dont on estime qu'elle est affectée par l'urgence, dans lequel l'information récupérée est constituée par des identités de stations de base radio à l'intérieur de la zone qui est affectée par l'urgence ou à l'intérieur de la zone dont on estime qu'elle est affectée par l'urgence ; et
- émettre (403) l'information récupérée sur les UE indépendamment du fait que les UE sont situés dans la zone qui est affectée par l'urgence ou dans la zone dont on estime qu'elle est affectée par l'urgence.

2. Procédé selon la revendication 1, comprenant l'étape supplémentaire consistant à :
- commander (404) un comportement de l'UE conformément à l'information récupérée.

3. Procédé selon l'une quelconque des revendications 1 et 2, comprenant l'étape supplémentaire consistant à :
- configurer l'UE de telle sorte que l'UE se comporte conformément à des règles prédéfinies suite à la réception de l'information récupérée.

4. Procédé selon la revendication 2 ou 3, dans lequel le comportement de l'UE est associé à au moins un événement pris parmi une recherche de cellule, des mesures, un transfert intercellulaire et une sélection de cellule à nouveau.

5. Procédé selon l'une quelconque des revendications précédentes 1 à 4, dans lequel le noeud de réseau est une passerelle d'accès, un contrôleur de réseau radio, un contrôleur de station de base, une station de base radio ou un e-noeud B.

6. Procédé dans un équipement d'utilisateur, UE1, pour recevoir une information d'alerte qui est associée à une urgence et qui provient d'un système d'alerte qui peut être connecté à un réseau de communication mobile avec lequel l'UE peut communiquer du faite qu'il est configuré ainsi, le procédé comprenant les étapes consistant à :
- recevoir (501) une information qui est associée à une zone qui est affectée par l'urgence ou à une zone dont on estime qu'elle est affectée par l'urgence et qui provient d'un noeud de réseau indépendamment de si oui ou non l'UE est situé dans la zone qui est affectée par l'urgence ou dans la zone dont on estime qu'elle est affectée par l'urgence, dans lequel l'information reçue est constituée par des identités de stations de base radio à l'intérieur de la zone qui est affectée par l'urgence ou à l'intérieur de la zone dont on estime qu'elle est affectée par l'urgence ;
- traiter (502) l'information reçue de manière à combiner l'information reçue avec une information de carte qui représente au moins une partie de la zone qui est affectée par l'urgence ou d'une zone dont on estime qu'elle est affectée par l'urgence ; et
- présenter (503) l'information combinée.

7. Procédé selon la revendication 6, dans lequel l'information reçue est une information géographique de la zone qui est affectée par l'urgence ou d'une zone dont on estime qu'elle est affectée par l'urgence.

8. Procédé selon l'une quelconque des revendications précédentes 6 et 7, comprenant l'étape supplémentaire consistant à :
- recevoir (504) une signalisation de commande qui comprend des commandes, dans lequel les commandes dépendent de l'information qui est associée à une zone qui est affectée par l'urgence ou à une zone dont on estime qu'elle est affectée par l'urgence, laquelle information provient d'un noeud de réseau ; et
- agir (505) conformément aux commandes de la signalisation de commande reçue.

9. Procédé selon l'une quelconque des revendications 6 à 8, comprenant l'étape supplémentaire consistant à :
- agir conformément à des règles prédéfinies suite à la réception de l'information.

10. Procédé selon l'une quelconque des revendications 8 et 9, dans lequel l'action est associée à au moins un événement pris parmi une recherche de cellule, des mesures, un transfert intercellulaire et une sélection de cellule à nouveau.

11. Noeud de réseau (203) pour transmettre une information d'alerte qui est associée à une urgence à des équipements d'utilisateur, UE, qui sont configurés de manière à camper sur le noeud de réseau ou à lui être connectés, le noeud de réseau comprenant un récepteur (206) pour recevoir une information (208) qui est associée à l'urgence et qui provient d'un système (207) qui est configuré de manière à collecter l'information qui est associée à ladite urgence, un processeur (204) pour traiter l'information reçue (208) de manière à récupérer des identités de stations de base radio à l'intérieur d'une zone qui est affectée par l'urgence ou à l'intérieur d'une zone dont on estime qu'elle est affectée par l'urgence, et un émetteur (205) pour émettre les identités récupérées de stations de base radio sur les UE (209) indépendamment de si oui ou non les UE (209) sont situés dans la zone affectée par l'urgence ou dans la zone dont on estime qu'elle est affectée par l'urgence.

12. Équipement d'utilisateur, UE, (300) pour recevoir une information d'alerte (309) qui est associée à une urgence et qui provient d'un système d'alerte (307) qui peut être connecté à un réseau de communication mobile avec lequel l'UE (300) peut communiquer du fait qu'il est configuré ainsi, l'UE comprenant un récepteur (312) pour recevoir des identités de stations de base radio à l'intérieur d'une zone qui est affectée par l'urgence ou à l'intérieur d'une zone dont on estime qu'elle est affectée par l'urgence, lesquelles identités proviennent d'un noeud de réseau (303) indépendamment du fait que l'UE (300) est situé dans la zone qui est affectée par l'urgence ou dans la zone dont on estime qu'elle est affectée par l'urgence, et un processeur (302) pour traiter les identités reçues de stations de base radio de manière à combiner les identités reçues de stations de base radio avec une information de carte qui représente au moins une partie de la zone qui est affectée par l'urgence ou d'une zone dont on estime qu'elle est affectée par l'urgence, et une interface utilisateur (301) qui est configurée de manière à présenter l'information combinée à un utilisateur.

13. Procédé pour distribuer une information d'alerte qui est associée à une urgence sur des équipements d'utilisateur, UE, qui sont campés sur un noeud de réseau d'un système de communication cellulaire ou qui lui sont connectés, le procédé comprenant les étapes consistant à :
- recevoir (401), au niveau du noeud de réseau, une information qui est associée à l'urgence et qui provient d'un système qui est configuré pour collecter l'information qui est associée à ladite urgence ;
- traiter (402), au niveau du noeud de réseau, l'information reçue de manière à récupérer des identités de stations de base radio à l'intérieur d'une zone qui est affectée par l'urgence ou à l'intérieur d'une zone dont on estime qu'elle est affectée par l'urgence ; et
- émettre (403) les identités récupérées de stations de base radio depuis le noeud de réseau sur les UE indépendamment de si oui ou non les UE sont situés dans la zone qui est affectée par l'urgence ou dans la zone dont on estime qu'elle est affectée par l'urgence ;
- recevoir (501), au niveau d'un UE, des identités de stations de base radio à l'intérieur d'une zone qui est affectée par l'urgence ou à l'intérieur d'une zone dont on estime qu'elle est affectée par l'urgence, lesquelles identités proviennent d'un noeud de réseau, indépendamment de si oui ou non l'UE est situé dans la zone qui est affectée par l'urgence ou dans la zone dont on estime qu'elle est affectée par l'urgence ;
- traiter (502), au niveau de l'UE, les identités de stations de base radio reçues de manière à combiner les identités de stations de base radio reçues avec une information de carte qui représente au moins une partie de la zone qui est affectée par l'urgence ou d'une zone dont on estime qu'elle est affectée par l'urgence ; et
- présenter (503), au niveau de l'UE, l'information combinée.
